# EUROPEAN PATENT APPLICATION

(11) **EP 3 875 170 A1**
(43) Date of publication of application: **08.09.2021**
(21) Application number: 19901642.9
(22) Date of filing: 25.12.2019
(51) Int. Cl.: B01D 71/34, B01D 71/38, C08J 9/28

(54) **POROUS FILM OF POLYVINYLIDENE FLUORIDE RESIN AND METHOD FOR MANUFACTURING SAME**

(30) Priority: 27.12.2018 JP 2018246097
(71) Applicant: Maruzen Petrochemical Co., Ltd., Tokyo 104-8502 (JP); National University Corporation Kobe University, Kobe-shi, Hyogo 657-8501 (JP)
(72) Inventor: NISHIYA Masakazu, Ichihara-shi, Chiba 290-8503 (JP); HASEGAWA Yasuhiko, Ichihara-shi, Chiba 290-8503 (JP); MATSUYAMA Hideto, Kobe-shi, Hyogo 657-8501 (JP)
(74) Representative: Regimbeau
(86) International application number: PCT/JP2019/050997
(87) International publication number: WO 2020/138230

(57) **Abstract**

Provided is a polyvinylidene fluoride resin-made porous membrane having excellent hydrophilicity, permeability, and fouling resistance and having suppressed elution of vinyl ether copolymer by using a small amount of vinyl ether copolymer.

[Means to solve the problem]

The porous membrane according to the invention comprises a polyvinylidene fluoride resin as a matrix material and a vinyl ether copolymer, wherein the vinyl ether copolymer is a copolymer of an oxyethylene group-containing vinyl ether monomer and a hydrocarbon group-containing vinyl ether monomer.

## Description

### FIELD OF THE INVENTION

The present invention relates to a polyvinylidene fluoride resin-made porous membrane. The present invention also relates to a method for producing a polyvinylidene fluoride resin-made porous membrane.

### BACKGROUND ART

Polymer porous membranes using polyvinylidene fluoride resins are known in the field of water treatment, mainly for the purpose of microfiltration and ultrafiltration. When various liquids are filtered using such a porous membrane, for example some of the organic substances contained in the liquid adhere and deposit on the inside or the surface of the membrane to form a cake layer. This phenomenon, the so-called fouling, is known to decrease the filtering performance of the porous membranes.

Since polyvinylidene fluoride resins have excellent durability, heat resistance, and chemical resistance, they are widely used as a porous membrane. On the other hand, since the polyvinylidene fluoride resin is a hydrophobic material, there is a problem that fouling easily occurs. In order to solve this problem, attempts have been made to enhance water affinity of the porous membrane and improve the permeability and fouling resistance by various methods.

As one example thereof, in order to reduce the hydrophobicity of the hydrophobic membrane of the polyvinylidene fluoride resin, there is known a method producing a polymeric ultrafiltration membrane or a microfiltration membrane by conducting post-treatment by immersing the hydrophobic membrane in a solution of hydrophilic polyvinyl methyl ether (PVME) or in which PVME is incorporated by blending PVME into a dope solution for forming the hydrophobic membrane (Patent Document 1).

In contrast, as another way of reducing the hydrophobicity of the hydrophobic membrane of the polyvinylidene fluoride resin, a method is known in which a hydrophilic polymer (copolymer) having a hydrophobic unit (methyl methacrylate) which is highly compatible with the polyvinylidene fluoride resin and a hydrophilic unit (poly (ethylene glycol) methylether methacrylate) is synthesized, and the hydrophilic polymer is blended with the polyvinylidene fluoride resin so that the hydrophilic polymer is fixed to the polyvinylidene fluoride resin (Patent Document 2).

### PRIOR ART DOCUMENTS

### PATENT DOCUMENTS

Patent Document 1: Japanese Patent No. 4908208
Patent Document 2: Japanese Unexamined Patent Application Publication No. 2017-170319

### SUMMARY OF THE INVENTION

### PROBLEM TO BE SOLVED BY THE INVENTION

As in the method described in Patent Document 1, when coating a hydrophilic homopolymer on the surface of a hydrophobic membrane of a polyvinylidene fluoride resin by post-treatment, there is a problem that the coated hydrophilic homopolymer blocks the pores of the membrane, which as a result, reduces the permeation flow, and that the coating layer peels off towards the secondary side during filtration.

When the present inventors have attempted to reduce the hydrophobicity of a porous membrane by blending poly-2-methoxyethyl vinyl ether (P-MOVE), i.e., a hydrophilic homopolymer similar to PVME, into a dope solution, a new problem was found that there was difficulty in letting P-MOVE remain in the porous membrane because of the low compatibility between P-MOVE and the polyvinylidene fluoride resin, i.e., a hydrophobic membrane, and as a result, P-MOVE was eluted from the porous membrane during filtration or chemical cleaning (see Comparative Example 1-1 to be mentioned below).

Further, in Patent Document 2, the mass ratio of the polyvinylidene fluoride resin to the hydrophilic polymer is 10/1 to 2/1, and the hydrophilic polymer needed to be blended in a large amount. In this case, there was a problem of high cost incurred because of the use of large amount of the hydrophilic polymer. In addition, the hydrophilic polymer needed to be blended in a large amount when imparting hydrophilicity to the polyvinylidene fluoride resin-made porous membrane also from the fact that the molar ratio of the hydrophobic unit to the hydrophilic unit in the hydrophilic polymer was 95/5 to 85/15, which the proportion of the hydrophobic unit was large.

Accordingly, in order to reduce the hydrophobicity of the polyvinylidene fluoride resin-made porous membrane in a method in which a hydrophilic polymer comprising a hydrophobic unit and a hydrophilic unit was blended to immobilize the hydrophilic polymer on the polyvinylidene fluoride resin, it was possible to impart hydrophilicity to the porous membrane even by blending a small amount of the hydrophilic polymer to the polyvinylidene fluoride resin, and it has been required for the porous membrane to have excellent water permeability and fouling resistance and the hydrophilic polymer to be prevented from elution.

The present invention has been made taking into consideration of the above-described situation, and the object is to provide a polyvinylidene fluoride resin-made porous membrane having excellent hydrophilicity, water permeability, and fouling resistance and reduced elution of a vinyl ether copolymer, and a method for producing the same.

### MEANS FOR SOLVING THE PROBLEM

In order to solve the above-mentioned problem, the present inventors intensively carried out study on the polyvinylidene fluoride resin-made porous membrane and the method for producing the same to find that blending a vinyl ether copolymer obtained by copolymerizing an oxyethylene group-containing vinyl ether monomer and a hydrocarbon group-containing vinyl ether monomer with a polyvinylidene fluoride resin as a matrix material makes it possible to produce a polyvinylidene fluoride resin-made porous membrane having excellent hydrophilicity, water permeability, and fouling resistance and reduced elution of the vinyl ether copolymer, and have thus completed the present invention.

That is, the present invention provides the following (1) to (8).
(1) A porous membrane comprising a polyvinylidene fluoride resin as a matrix material and a vinyl ether copolymer, wherein
   the vinyl ether copolymer is a copolymer of an oxyethylene group-containing vinyl ether monomer and a hydrocarbon group-containing vinyl ether monomer.
(2) The porous membrane according to (1), wherein
   the oxyethylene group-containing vinyl ether monomer is represented by the following formula (1): 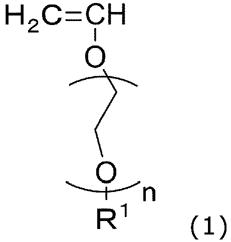 wherein
   n represents an average value of 1 to 3, and
   R¹ represents an alkyl group having 1 to 2 carbons.
(3) The porous membrane according to (1) or (2), wherein
   the hydrocarbon group-containing vinyl ether monomer is represented by the following formula (2): 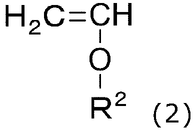 wherein
   R² represents a hydrocarbon group having 1 to 6 carbons.
(4) The porous membrane according to any one of (1) to (3), wherein the mass ratio of the polyvinylidene fluoride resin to the vinyl ether copolymer is 90:10 to 99.5:0.5.
(5) The porous membrane according to any one of (1) to (4), wherein
   the molar ratio of the oxyethylene group-containing vinyl ether monomer to the hydrocarbon group-containing vinyl ether monomer is 10:90 to 90:10.
(6) The porous membrane according to any one of (1) to (5), wherein
   the vinyl ether copolymer has a number average molecular weight (Mn) of 3,000 to 30,000.
(7) A method for manufacturing the porous membrane according to any one of (1) to (6), wherein
   a non-solvent induced phase separation method, a thermally induced phase separation method, or a combination of both is used.
(8) The manufacturing method according to (7), wherein
   the non-solvent-induced phase separation method is used and one or more selected from N-methyl-2-pyrrolidone and N,N-dimethylacetamide as a good solvent and one or more selected from water and methanol as a non-solvent are used.

### EFFECT OF THE INVENTION

According to the present invention, a polyvinylidene fluoride resin-made porous membrane can be produced, having excellent hydrophilicity, water permeability, and fouling resistance and reduced elution of the vinyl ether copolymer by blending a vinyl ether copolymer obtained by copolymerizing an oxyethylene group-containing vinyl ether monomer and a hydrocarbon group-containing vinyl ether monomer with a dope solution for forming a polyvinylidene fluoride resin-made porous membrane.

### MODE FOR CARRYING OUT THE INVENTION

### <Definition>

In the present specification, the number-average molecular weight (Mn) and the weight-average molecular weight (Mw) mean values measured by gel permeation chromatography (GPC), in particular, values measured by the methods described in the following examples.

### < Porous membrane >

A porous membrane according to the present invention is a porous membrane comprising a polyvinylidene fluoride resin as a matrix material and a vinyl ether copolymer, wherein the vinyl ether copolymer is a copolymer of an oxyethylene group-containing vinyl ether monomer and a hydrocarbon group-containing vinyl ether monomer.

The polyvinylidene fluoride resin is a suitable material for the porous membrane of the present invention because of its excellent film formability and durability. As the polyvinylidene fluoride resin usable in the present invention, a homopolymer of vinylidene fluoride or a copolymer having a vinylidene fluoride unit can be used. Examples of the copolymer having a vinylidene fluoride unit include a vinylidene fluoride-hexafluoropropylene copolymer and a vinylidene fluoride-tetrafluoroethylene copolymer and the like.

The mass ratio of the polyvinylidene fluoride resin to the vinyl ether copolymer is preferably from 90.0:10.0 to 99.5:0.5, more preferably from 90.0:10.0 to 99.0:1.0, and further more preferably from 90.0:10.0 to 98.0:2.0.

The vinyl ether copolymer is a copolymer of an oxyethylene group-containing vinyl ether monomer and a hydrocarbon group-containing vinyl ether monomer, and may be a block copolymer or a random copolymer. The molar ratio of the oxyethylene group-containing vinyl ether monomer to the hydrocarbon group-containing vinyl ether monomer is preferably 10:90 to 90:10, further preferably 80:20, and particularly preferably 60:40.

When the content ratio of the oxyethylene group-containing vinyl ether monomer is 10 mol% or more, hydrophilicity can be easily maintained and sufficient water permeability and fouling resistance can be obtained. Further, when the content ratio of the oxyethylene group-containing vinyl ether monomer is 90 mol% or less, the vinyl ether copolymer tends to remain in the porous membrane and can be inhibited from eluting from the porous membrane during filtration or chemical cleaning.

The oxyethylene group-containing vinyl ether monomer is a monomer having an oxyethylene group in the side chain and is represented by the following formula (1): 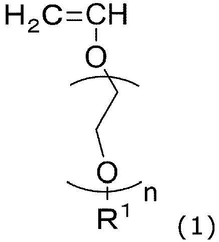 wherein,
R¹ represents an alkyl group having a number of carbons of 1 to 2, preferably being a methyl group or an ethyl group, and n represents an average value of 1 to 3. This average value can be determined by NMR.

Specific examples of the oxyethylene group-containing vinyl ether monomer include at least one selected from the group represented by methoxyethyl vinyl ether, ethoxyethyl vinyl ether, methoxyethoxyethyl vinyl ether, ethoxyethoxyethyl vinyl ether, methoxyethoxyethoxyethyl vinyl ether, ethoxyethoxyethoxyethyl vinyl ether, and the like, and from the viewpoint of compatibility with vinylidene fluoride and the solvents, more preferred are methoxyethyl vinyl ether, ethoxyethyl vinyl ether, ethoxyethoxyethyl vinyl ether, and methoxyethoxyethoxyethyl vinyl ether, and particularly preferred is methoxyethyl vinyl ether.

The hydrocarbon group-containing vinyl ether monomer is represented by the following formula (2): 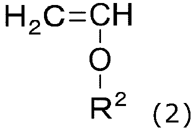 wherein, examples of the hydrocarbon group represented by R² include an alkyl group, a cycloalkyl group, a bridged ring hydrocarbon group, and an aryl group. Among these, preferred are an alkyl group and a cycloalkyl group, and particularly preferred is an alkyl group. The number of carbons of the alkyl group represented by R² is preferably 1 to 6 and more preferably 2 to 6.

The alkyl group may be linear or branched, and specific examples thereof include a methyl group, ethyl group, n-propyl group, isopropyl group, n-butyl group, isobutyl group, sec-butyl group, tert-butyl group, n-pentyl group, neopentyl group, isopentyl group, sec-pentyl group, tert-pentyl group, n-hexyl group, isohexyl group, and the like. The number of carbons in the cycloalkyl group represented by R² is preferably 3 to 6, and specific examples thereof include a cyclopropyl group, cyclobutyl group, cyclopentyl group, cyclohexyl group, and the like.

Specific examples of the hydrocarbon group-containing vinyl ether monomer preferably include at least one selected from the group of alkyl vinyl ethers, represented by methyl vinyl ether, ethyl vinyl ether, n-propyl vinyl ether, isopropyl vinyl ether, cyclopropyl vinyl ether, n-butyl vinyl ether, isobutyl vinyl ether, sec-butyl vinyl ether, tert-butyl vinyl ether, cyclobutyl vinyl ether, n-pentyl vinyl ether, neopentyl vinyl ether, isopentyl vinyl ether, sec-pentyl vinyl ether, tert-pentyl vinyl ether, cyclopentyl vinyl ether, n-hexyl vinyl ether, isohexyl vinyl ether, cyclohexyl vinyl ether, etc., and from the viewpoint of compatibility with vinylidene fluoride and the solvents, preferred are n-butyl vinyl ether and cyclohexyl vinyl ether, and more preferred is n-butyl vinyl ether.

The number average molecular weight (Mn) of the vinyl ether copolymer is preferably 3,000 to 30,000, more preferably 5,000 to 25,000, and further more preferably 7,000 to 23,000. The molecular weight distribution (Mw/Mn) of the vinyl ether copolymer is preferably 1.00 to 2.00, more preferably 1.05 to 1.70, and further preferably 1.10 to 1.50. When the Mn and Mw/Mn of the vinyl ether copolymer are within the above numerical ranges, most of the vinyl ether copolymer remains in the formed porous membrane, being prevented from eluting from the porous membrane during filtration and at the time of chemical cleaning, which as a result, allows the hydrophilic property of the porous membrane maintained for a long time.

The polymerization method of the vinyl ether copolymer is not particularly limited and can be carried out by a conventionally known method, and may be either block copolymerization or random copolymerization.

### < Method for Producing Porous Membrane >

The porous membrane of the present invention is not particularly limited and can be produced by various methods. Examples of the method include a phase separation method, an extension method, an etching method, a melt extraction method, and the like. The melt extraction method is a method for obtaining a porous membrane, wherein inorganic fine particles and an organic liquid are melt kneaded into a mixture, then the mixture is extruded from a cap at a temperature above the melting point of the polyvinylidene fluoride resin and the vinyl ether copolymer, or the mixture is molded with a press machine and subsequently cooled and solidified to extract the organic liquid and the inorganic fine particles.

The method for producing the porous membrane of the present invention is preferably a phase separation method, and examples of the phase separation method include a non-solvent induced phase separation method, a thermally induced phase separation method, or a combined method of both. The non-solvent induced phase separation method is a method by undergoing a step of dissolving in a solvent (good solvent) that dissolves the polyvinylidene fluoride resin and the vinyl ether copolymer and subsequently a step of discharging the dope solution (film-forming solution) from a slit die or a cap to bring into contact with a coagulation bath comprising a non-solvent to induce phase separation. The thermally induced phase separation method is a method of inducing phase separation by dissolving in a good solvent for dissolving the polyvinylidene fluoride resin and the vinyl ether copolymer or in a poor solvent for dissolving at a high temperature range, and then discharging a solution from a slit mold or a cap and cooling the mixture by bringing the mixture into contact with air or water.

In the present invention, the non-solvent induced phase separation method is more preferable because the size of the pore diameter of the porous membrane can be easily controlled. By immersing the dope solution in a coagulation bath containing a non-solvent, concentration gradient between the solvent of the dope solution and the non-solvent in the coagulation bath can be utilized to induce non-solvent induced phase separation.

According to this method, since on the outer surface where phase separation occurs first by substitution of a solvent and a non-solvent is formed a dense layer and phase separation progresses toward the inner side of the film, it is possible to produce a so-called asymmetric film in which the pore diameter continuously increases toward the inner side of the film.

In the process for producing a porous membrane of the present invention where a non-solvent induced phase separation method is used, use is made to a good solvent and a non-solvent, which the term "good solvent" refers to a solvent highly soluble in the polyvinylidene fluoride resin and the vinyl ether copolymer. The non-solvent means a solvent which does not dissolve or swell the resin up to the melting point of the resin or the boiling point of the liquid.

Examples of the good solvent include N-methyl-2-pyrrolidone, N,N-dimethylformamide, dimethylsulfoxide, N,N-dimethylacetamide, trimethyl phosphate, and a mixed solvent thereof. In the present invention, the good solvent is preferably N-methyl-2-pyrrolidone and N,N-dimethylacetamide, and particularly preferably N-methyl-2-pyrrolidone.

On the other hand, examples of the non-solvent include water, methanol, ethanol, propanol, and a mixed solvent thereof. In the present invention, the non-solvent is preferably water or methanol, and particularly preferably water from the viewpoint of versatility.

### EXAM PLES

Next, the present invention will be described in more details with reference to the Examples and Comparative Examples; however, the present invention shall not be limited to these Examples and the like.

### (Method for Measuring Mn and Mw/Mn)

The number average molecular weight (Mn) and weight average molecular weight (Mw) of the homopolymer and the copolymer were analyzed by gel permeation chromatography (GPC) under the following conditions.

### <Conditions>

Analysis column: "Shodex LF-804" (trade name) (8.0 x 300 mm), manufactured by Showa Denko K.K., 3 columns Reference column: "TSKgelSuperHZM-N" (trade name) (6.0 x 150 mm) 3 columns (Tosoh Co., Ltd.)
Eluent: THF
Measurement temperature: 40 °C
Flow rate: Analytical column 1.00 mL/min, reference column 0.50 mL/min
Note that, Mw and Mn were determined using a calibration curve prepared using polystyrene (11 kinds having Mp (peak top molecular weights) of 1,090,000, 706,000, 427,000, 190,000, 96,400, 37,900, 19,500, 10,200, 5,390, 2,630 and 1,010), manufactured by Tosoh Co., Ltd.

### < Synthesis Example >

### < Synthesis Flow 1 >

One stirrer tip was placed in a 4-neck flask and the top and side ports were each sealed with greased plugs. One of the sides was plugged with a 3-way stopcock and the other likewise with a thermometer protective tube with a sealed bottom. The entire flask was heated with a heat gun while degassing, the moisture in the flask was discharged, followed by nitrogen substitution. This operation of degassing and nitrogen substitution was repeated 3 times. Next, the flask was set in a low and constant temperature water bath with a magnetic stirrer ("PSL-1400" (trade name), manufactured by Tokyo Scientific Instrument Co., Ltd.) while the nitrogen flow was maintained at -5 °C. At this time, methanol was introduced into the thermometer protection tube, and a thermometer (TR-81 (trade name) manufactured by T&D Corporation) was installed. Into this was introduced 92.00 mL of ultra-dehydrated toluene (manufactured by Fujifilm Wako Pure Chemical Industries, Ltd.).

### < Synthesis Example 1, Synthesis of Vinyl Ether Copolymer (B-1) >

Block copolymers of methoxyethyl vinyl ether (MOVE) and n-butyl vinyl ether (nBVE) were synthesized based on Synthesis Flow 1.

Specifically, into the flask shown in Synthesis Flow 1 were added, 18.34 mL of ethyl acetate (AcOEt), 0.136 mL of isobutoxyethyl acetate (IBEA), 10.45 mL of MOVE, and 2.75 mL of ethyl aluminum sesquichloride (EASC), and the inside was maintained at -5 °C until the conversion rate of MOVE reached 95%. Then, 1.29 mL of nBVE was added to the same flask, and the mixture was further maintained until the conversion ratio of nBVE was 95% or more. The pH of polymerization reaction was neutralized with 1.00 mol/L sodium methoxide, and ion-exchange resin was added and stirring was continued overnight. The next day, vacuum filtration was performed, and the filtrates were dried in vacuo to obtain a block copolymer of MOVE and nBVE. The Mn of the obtained vinyl ether copolymer was 15,700 and the Mw/Mn was 1.18.

### < Synthesis Examples 2 to 6 and 8 to 12, Synthesis of Vinyl Ether Copolymers (B-2) to (B-6) and (B-8) to (B-10) and Homopolymers (B-11 and B-12) >

Vinyl ether copolymers (B-2) to (B-10) and homopolymers (B-11 and B-12) were synthesized in the same manner as the vinyl ether copolymer (B-1), except that the monomer composition ratio (molar ratio) was changed as shown in Table 1 based on Synthesis Flow 1. Each was measured for the Mn and the Mw/Mn. Although the monomer composition ratio was the same in Synthesis Examples 3 and 8, the molecular weight and the molecular weight distribution were adjusted by changing the amount of added monomer.

### < Synthesis Example 7, Synthesis of Vinyl Ether Copolymer (B-7) >

A random copolymer of MOVE and nBVE was synthesized based on Synthesis Flow 1.

Specifically, into the flask shown in Synthesis Flow 1 were further added, 18.34 mL of AcOEt, 0.136 mL of IBEA, 6.96 mL of MOVE, 5.15 mL of nBVE, and 2.75 mL of EASC, and the mixture was kept at -5 °C until the conversion ratio of both MOVE and nBVE reached 95% or more. The pH of polymerization reaction was neutralized with 1.00 mol/L sodium methoxide, and ion-exchange resin was added and stirring was continued overnight. The next day, vacuum filtration was performed, and the filtrates were dried in vacuo to obtain a random copolymer of MOVE and nBVE. The Mn of the obtained vinyl ether copolymer was 17,500 and the Mw/Mn was 1.20.

The above results are shown in Table 1. TEGVE in the table represents methoxyethoxyethoxyethyl vinyl ether and CHVE represents cyclohexyl vinyl ether.

**[Table 1] Synthesis Examples list**

| | | | synthesis example 1 | synthesis example 2 | synthesis example 3 | synthesis example 4 | synthesis example 5 | synthesis example 6 | synthesis example 7 | synthesis example 8 | synthesis example 9 | synthesis example 10 | synthesis example 11 | synthesis example 12 |
|---|---|---|---|---|---|---|---|---|---|---|---|---|---|---|
| vinyl ether copolymer B | | | B-1 | B-2 | B-3 | B-4 | B-5 | B-6 | B-7 | B-8 | B-9 | B-10 | B-11 | B-12 |
| monomer composition ratio | oxyethylene group-containing monomer | MOVE | 90 | 80 | 60 | 40 | 30 | 10 | 60 | 60 | 60 | - | 100 | 0 |
| | | TEGVE | - | - | - | - | - | - | - | - | - | 60 | - | - |
| | hydrocarbon group-containing monomer | n-BVE | 10 | 20 | 40 | 60 | 70 | 90 | 40 | 40 | - | 40 | - | 100 |
| | | CHVE | - | - | - | - | - | - | - | - | 40 | - | - | - |
| classification of copolymerization | | | block copolymerization | | | | | | random copolymerization | block copolymerization | | | | |
| number average molecular weight molecular distribution | | Mn | 15700 | 15200 | 10200 | 14100 | 14500 | 15800 | 17500 | 21200 | 13100 | 8100 | 14700 | 15200 |
| | | Mw/Mn | 1.18 | 1.19 | 1.41 | 1.34 | 1.13 | 1.10 | 1.20 | 1.15 | 1.26 | 1.38 | 1.31 | 1.12 |

### (Measurement method)

### (1) Leaching test

The quantitative determination of vinyl ether copolymer B leaching from the porous membrane was carried out by the following method. The vinyl ether copolymer B (0.1 to 1.4% by weight) and polyvinylidene fluoride (14% by weight) obtained in each synthesis example were dissolved in the solvent, N-methyl-2-pyrrolidone (84.6 to 85.9% by weight) to prepare a resin solution. Subsequently, the prepared resin solution was applied to a glass plate using an applicator (254 µm), and immediately immersed in an ion exchange water bath at 25 °C for 1 hour, thereby obtaining a flat porous membrane. The obtained porous membrane was dried under reduced pressure using a diaphragm pump and a desiccator for 24 hours, thereby removing water and the residual solvent. Next, a dried film cut to a size of 1.0 g, 50 mL of pure water, and a magnetic stirrer were added to a glass bottle which was then sealed and stirred at 25 °C at a stirring speed of 100 rpm. The aqueous solution in the container was sampled and replaced with pure water every 24, 48, and 72 hours, and the amount of total organic carbon (TOC) in the aqueous solution obtained at each hour was quantified, and the progress of the amount of eluted vinyl ether copolymer B was evaluated.

### (2) Measurement of Amount of Permeated Water

The resin solution prepared as described above was discharged from the double-tube type cap together with the ion exchanged water as an internal liquid, and solidified with the ion exchanged water to form a hollow fiber membrane.

Using the hollow fiber membrane thus obtained, measurement was conducted by an external pressure method under the condition of 25 °C and a transmembrane pressure difference of 100 kPa, and the value obtained was converted into the amount of permeated water per 1 square meters, 1 hour, and 100 kPa.

### (3) Fouling test

An aqueous solution of 100 ppm bovine serum albumin was prepared, and by using the hollow fiber membrane prepared as described above, filtration was conducted by an external pressure method under the condition of 25 °C and a transmembrane pressure difference of 100 kPa for 1 hour, and the relative change in the permeation flow rate was recorded.

### (Leaching Test)

### < Example 1-1 >

To a glass container were added, polyvinylidene fluoride (Arkema K.K., "Kynar MG15" (trade name)) as the polyvinylidene fluoride resin (A) which serves as the matrix material, B-1 synthesized in Synthesis Example 1 as a vinyl ether copolymer (B), and N-methyl-2-pyrrolidone as a solvent, mixed, stirred at 25 °C for 3 hours, and left to stand overnight to prepare a resin solution having the following compositions.
Polyvinylidene fluoride (PVDF) (A): 14% by weight
Polyvinyl ether copolymer (B-1): 0.70% by weight
N-methyl-2-pyrrolidone (NMP): 85.3% by weight
A flat film was prepared using the obtained resin solution, and leaching test was conducted. The results are shown in Table 2.

### < Examples 1-2 to 1-6 >

Leaching test was conducted in the same manner as in Example 1-1, except that B-2 to B-6 shown in Table 1 were used respectively as the vinyl ether copolymer (B). The results are shown in Table 2.

### < Comparative Example 1-1 >

Leaching test was conducted in the same manner as in Example 1-1, except that the homopolymer (B-1) shown in Table 1 was used instead of the vinyl ether copolymer (B). The result is shown in Table 2.

**[Table 2] Result of Leaching test**

| | | Total Organic Carbon (TOC) [mg/L] | | | | | | |
|---|---|---|---|---|---|---|---|---|
| | | Example 1-1 | Example 1-2 | Example 1-3 | Example 1-4 | Example 1-5 | Example 1-6 | Co. Example 1-1 |
| Time Elapsed | 24[h] | 22.8 | 38.3 | 31.1 | 34.2 | 40.8 | 28.8 | 65.1 |
| | 48[h] | 3.9 | 4.0 | 3.6 | 3.3 | 3.0 | 2.5 | 10.8 |
| | 72[h] | 2.1 | 2.4 | 2.5 | 1.9 | 2.3 | 3.0 | 5.9 |

From the results of Examples 1-1 to 1-6 and Comparative Example 1-1 shown in Table 2, it was found that the elution amount into pure water can be suppressed in the case where a vinyl ether copolymer of a copolymer of an oxyethylene group-containing vinyl ether monomer and a hydrocarbon group-containing vinyl ether monomer is blended with a polyvinylidene fluoride resin, as compared with the case where a homopolymer obtained by homopolymerization of an oxyethylene group-containing vinyl ether monomer is blended with a polyvinylidene fluoride resin.

### (Measurement of Amount of Permeated Water and Fouling Test) < Example 2-1 >

To a glass container were added, polyvinylidene fluoride (Arkema Co., Ltd., "Kynar MG15" (trade name)) as polyvinylidene fluoride resin (A) which serves as a matrix material, B-1 synthesized in Synthesis Example 1 as vinyl ether copolymer (B), and N-methyl-2-pyrrolidone (NMP) as a solvent, mixed, stirred at 25 °C for 3 hours, and subsequently left to stand overnight to prepare a resin solution having the composition shown in Table 3. A hollow fiber membrane was prepared using this resin solution, and measurement of the amount of permeated water and fouling tests were conducted. The results are shown in Table 3.

### < Examples 2-2 to 2-14 >

A hollow fiber membrane was prepared in the same manner as in Example 2-1 except that the resin solution comprising the vinyl ether copolymer (B) shown in Table 3 was used, and measurement of the amount of permeated water and fouling tests were conducted. The results are shown in Table 3.

### < Comparative Example 2-1 >

Measurement of the amount of permeated water and fouling tests were conducted in the same manner as in Example 2-1 except that the hollow fiber membrane prepared from a resin solution of 14% by weight of polyvinylidene fluoride and 86% by weight of N-methyl-2-pyrrolidone was used without using the vinyl ether copolymer (B). The results are shown in Table 3.

**[Table 3] Results of permeability measurement and fouling tests**

| | | | Example 2-1 | Example 2-2 | Example 2-3 | Example 2-4 | Example 2-5 | Example 2-6 | Example 2-7 | Example 2-8 | Example 2-9 | Example 2-10 | Example 2-11 | Example 2-12 | Example 2-13 | Example 2-14 | Co. Example 2-1 |
|---|---|---|---|---|---|---|---|---|---|---|---|---|---|---|---|---|---|
| vinyl ether copolymer B | | | B-1 | B-2 | B-3 | B-4 | B-5 | B-6 | B-7 | B-8 | B-9 | B-10 | B-2 | B-2 | B-2 | B-2 | - |
| weight % | Matrix A | PVDF | 14 | 14 | 14 | 14 | 14 | 14 | 14 | 14 | 14 | 14 | 14 | 14 | 14 | 14 | 14 |
| | vinyl ether copolymer B | | 0.7 | 0.7 | 0.7 | 0.7 | 0.7 | 0.7 | 0.7 | 0.7 | 0.7 | 0.7 | 1.4 | 1.0 | 0.4 | 0.1 | 0 |
| | Solvent | NMP | 85.3 | 85.3 | 85.3 | 85.3 | 85.3 | 85.3 | 85.3 | 85.3 | 85.3 | 85.3 | 84.6 | 85.0 | 85.6 | 85.9 | 86.0 |
| Matrix A : Copolymer B (mass ratio) | | | 95.2:4.8 | 95.2:4.8 | 95.2:4.8 | 95.2:4.8 | 95.2:4.8 | 95.2:4.8 | 95.2:4.8 | 95.2:4.8 | 95.2:4.8 | 95.2:4.8 | 90.9:9.1 | 93.3:6.7 | 97.2:2.8 | 99.3:0.7 | 100:0 |
| pure water permeability flux [L/(m^2·min] | | | 4.11 | 3.93 | 3.86 | 3.76 | 2.65 | 2.21 | 3.27 | 2.90 | 1.96 | 4.13 | 6.02 | 4.08 | 3.61 | 3.02 | 1.45 |
| after fouling test | | | 0.73 | 0.77 | 0.74 | 0.73 | 0.70 | 0.75 | 0.73 | 0.70 | 0.69 | 0.77 | 0.75 | 0.73 | 0.75 | 0.65 | 0.35 |

From the results of Examples 2-1 to 2-14 and Comparative Example 2-1 shown in Table 3, it was confirmed that the pure water permeability flux (water permeability) and the fouling resistance were improved by blending the vinyl ether copolymer with the polyvinylidene fluoride resin as in Examples 2-1 to 2-14, as compared with the membrane comprising only the polyvinylidene fluoride resin of Comparative Example 2-1. The same effect was also confirmed when the types of oxyethylene group-containing vinyl ether monomers and hydrocarbon group-containing vinyl ether monomers were changed, or when the polymerization classification was changed from random copolymerization to block copolymerization.

In Examples 2-2 and 2-11 to 2-14, the vinyl ether copolymer (B) in the resin solution was added in an amount of 0.1 to 1.4% by weight based on the total resin solution. The pure water permeability flux was confirmed to increase with the addition of vinyl ether copolymer. Also, all the Examples were confirmed to have improved fouling resistance than the membrane made of polyvinylidene fluoride resin alone of Comparative Example 2-1.

## Claims

1. A porous membrane comprising a polyvinylidene fluoride resin as a matrix material and a vinyl ether copolymer, wherein
the vinyl ether copolymer is a copolymer of an oxyethylene group-containing vinyl ether monomer and a hydrocarbon group-containing vinyl ether monomer.

2. The porous membrane according to claim 1, wherein
the oxyethylene group-containing vinyl ether monomer is represented by the following formula (1): 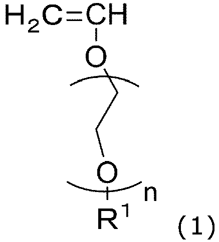 wherein,
n represents an average value of 1 to 3, and
R¹ represents an alkyl group having 1 to 2 carbons.

3. The porous membrane according to claim 1 or 2, wherein
the hydrocarbon group-containing vinyl ether monomer is represented by the following formula (2): 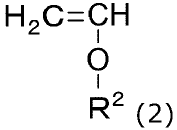 wherein,
R² represents a hydrocarbon group having 1 to 6 carbons.

4. The porous membrane according to any one of claims 1 to 3, wherein
the mass ratio of the polyvinylidene fluoride resin to the vinyl ether copolymer is 90.0:10.0 to 99.5:0.5.

5. The porous membrane according to any one of claims 1 to 4, wherein
the molar ratio of the oxyethylene group-containing vinyl ether monomer to the hydrocarbon group-containing vinyl ether monomer is 10:90 to 90:10.

6. The porous membrane according to any one of claims 1 to 5, wherein
the vinyl ether copolymer has a number average molecular weight (Mn) of 3,000 to 30,000.

7. A method of manufacturing the porous membrane according to any one of claims 1 to 6, wherein
a non-solvent induced phase separation method, a thermally induced phase separation method, or a combination of both is used.

8. The method according to claim 7, wherein
the non-solvent induced phase separation method is used and one or more selected from N-methyl-2-pyrrolidone and N,N-dimethylacetamide is used as a good solvent and one or more selected from water and methanol is used as a non-solvent.
